# EUROPEAN PATENT SPECIFICATION

(11) **EP 3 595 075 B1**
(45) Date of publication and mention of the grant of the patent: **01.11.2023**
(21) Application number: 17899847.2
(22) Date of filing: 07.03.2017
(51) Int. Cl.: H01M 10/0585, H01M 4/70, H01M 10/04

(54) **SECONDARY BATTERY**
SEKUNDÄRBATTERIE
ACCUMULATEUR

(43) Date of publication of application: 15.01.2020
(73) Proprietor: Envision AESC Japan Ltd., Zama-shi, Kanagawa 252-0012 (JP); Renault s.a.s, 92100 Boulogne Billancourt (FR)
(72) Inventor: MUROYA, Yuji, Atsugi-shi Kanagawa 243-0123 (JP); NARUOKA, Yoshinori, Atsugi-shi Kanagawa 243-0123 (JP)
(74) Representative: Global IP Europe Patentanwaltskanzlei
(86) International application number: PCT/JP2017/009063
(87) International publication number: WO 2018/163294

(56) References cited:
- WO-A1-2011/125325
- JP-A- 2011 060 690
- JP-A- 2013 157 283
- JP-A- 2014 167 890
- JP-A- 2015 222 633
- US-A1- 2012 045 685
- US-A1- 2014 127 557
- US-A1- 2017 025 682

## Description

### [Technical Field]

The present invention relates to a secondary battery.

### [Background Technology]

A secondary battery has at least one power generation element. The power generation element has a positive electrode having a collector on which a positive electrode active material layer is disposed, an electrolyte layer for retaining an electrolyte, and a negative electrode having a collector on which a negative electrode active material layer is disposed. The negative electrode collector has an active material region in which the negative electrode active material layer is disposed, and a non-active-material region in which the negative electrode active material layer is not disposed.

In recent years, a negative electrode active material containing silicon has been applied in the negative electrode active material layer for the purpose of increasing capacity (see WO 01/029918 A, for example). US 2017/0025682 A1 discloses a secondary battery comprising:
a power generation element including: a positive electrode having a positive electrode collector on which a positive electrode active material layer is disposed; an electrolyte layer for retaining an electrolyte; and a negative electrode having a negative electrode collector on which is disposed a negative electrode active material layer having a negative electrode active material containing silicon;
the positive electrode active material layer and the negative electrode active material layer facing each other with the electrolyte layer interposed therebetween.

### [Disclosure of the Invention]

### [Problems to Be Solved by the Invention]

However, silicon undergoes a change in volume in response to charging and discharging of the secondary battery. Expansion and contraction therefore occur in the silicon-containing active material region, and expansion and contraction does not occur in the non-active-material region, which does not contain silicon.

This expansion and contraction results in a problem of stress due to a dimensional difference in expansion and contraction between the active material region and the non-active-material region of the negative electrode, and of wrinkling originating at a boundary of the non-active-material region and the active material region. For example, the wrinkling grows as a result of repeated charging and discharging of the secondary battery, and the wrinkling reaches a site (i.e., a portion facing the positive electrode) where electrode reactions occur, and causes an inter-electrode distance between the positive electrode and the negative electrode to become nonuniform. As a result, cycle characteristics (service life) could be adversely affected.

The present invention was contrived in order to overcome the problems of the prior art described above. An object of the present invention is to provide a secondary battery in which it is possible to suppress wrinkling originating at the boundary of the non-active-material region and the active material region in the negative electrode.

### [Means Used to Solve the Above-Mentioned Problems]

The present invention for achieving the abovementioned object is a secondary battery comprising a negative electrode having a negative electrode collector on which is disposed a negative electrode active material layer having a negative electrode active material containing silicon, the negative electrode collector having an active material region in which the negative electrode active material layer is disposed, a non-active-material region in which the negative electrode active material layer is not disposed, and a slit extending from the non-active-material region to the active material region.

### [Effect of the Invention]

In the present invention, the slit extending from the non-active-material region to the active material region relieves stress that occurs in the negative electrode during charging and discharging of the secondary battery. Wrinkling originating at the boundary of the non-active-material region and the active material region is therefore suppressed even when the change in volume of the silicon is large. Consequently, a secondary battery can be provided in which it is possible to suppress wrinkling originating at the boundary of the non-active-material region and the active material region in the negative electrode.

Other objects, features, and characteristics of the present invention will become apparent from the preferred embodiments presented as examples in the following description and the accompanying drawings.

### [Brief Description of the Drawings]

Figure 1 is an oblique view illustrating a secondary battery according to an embodiment of the present invention;
Figure 2 is a sectional view of the secondary battery shown in Figure 1;
Figure 3 is a sectional view illustrating a battery body and power generation elements shown in Figure 2;
Figure 4 is a plan view illustrating a negative electrode shown in Figure 3;
Figure 5 is a plan view illustrating a positive electrode shown in Figure 3;
Figure 6 is a sectional view illustrating slits shown in Figure 4;
Figure 7 is a plan view illustrating a first modification of an embodiment of the present invention;
Figure 8 is a plan view illustrating a second modification of an embodiment of the present invention;
Figure 9 is a plan view illustrating a third modification of an embodiment of the present invention;
Figure 10 is an oblique view illustrating a fourth modification of an embodiment of the present invention;
Figure 11 is a plan view illustrating the fourth modification of an embodiment of the present invention;
Figure 12 is a plan view illustrating a fifth modification of an embodiment of the present invention;
Figure 13 is a plan view illustrating a sixth modification of an embodiment of the present invention; and
Figure 14 is a plan view illustrating a seventh modification of an embodiment of the present invention.

### [Preferred Embodiments of the Invention]

Embodiments of the present invention are described below with reference to the accompanying drawings. Ratios of dimensions in the drawings are sometimes exaggerated for convenience of description, and may vary from actual ratios.

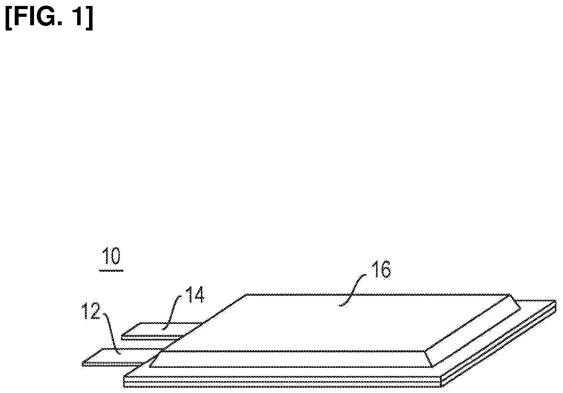

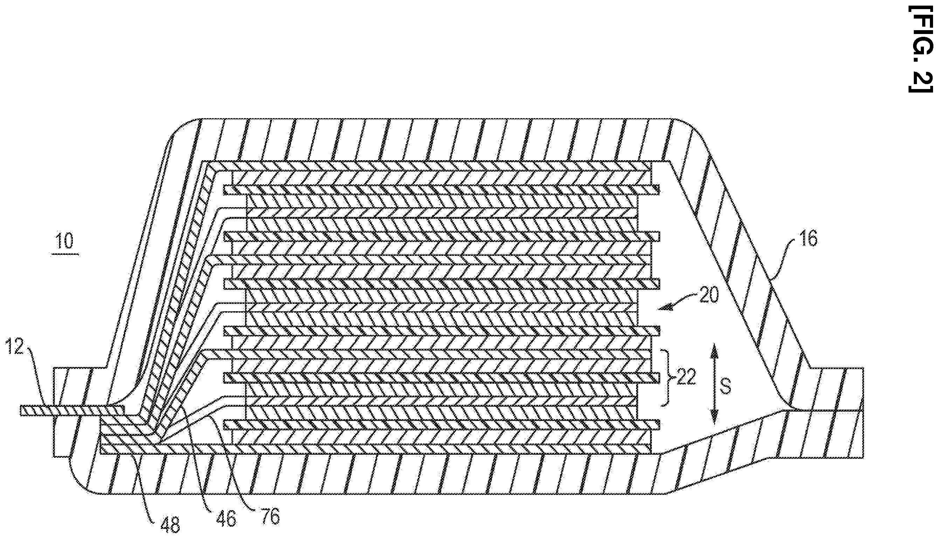

Figure 1 is an oblique view illustrating a secondary battery according to an embodiment of the present invention, and Figure 2 is a sectional view of the secondary battery shown in Figure 1.

A secondary battery 10 according to an embodiment of the present invention is a non-bipolar lithium-ion secondary battery, and has a negative electrode tab 12, a positive electrode tab 14, and an exterior body 16, as indicated in Figure 1. The secondary battery 10 is, for example, formed into an assembled battery and used as a power source device for a vehicle. The vehicle is, for example, an electric automobile or a hybrid electric automobile.

The negative electrode tab 12 and the positive electrode tab 14 are strong electrode terminals comprising highly electroconductive members. The tabs extend out from inside the exterior body 16, and are used in order to send out an electric current. The negative electrode tab 12 and the positive electrode tab 14 are preferably covered, for example, by a heat-resistant and insulating heat-shrinkable tubing, and are thereby reliably prevented from coming in electrical contact with peripheral equipment, wiring, etc.

As indicated in Figure 2, a battery body 20 is disposed inside the exterior body 16, and the exterior body 16 is used to prevent shock of external origin or environmental degradation. The exterior body 16 is formed by joining some or all of an external peripheral part of a sheet member. Examples of the joining method include thermal fusion bonding.

The battery body 20 has a plurality of power generation elements (unit cells) 22. The power generation elements 22 are stacked and electrically connected in parallel. Reference symbol S is used to indicate a stacking direction of the power generation elements 22.

The highly electroconductive members constituting the negative electrode tab 12 and the positive electrode tab 14 are, for example, aluminum, copper, titanium, nickel, stainless steel, or an alloy thereof.

The sheet member constituting the exterior body 16 is preferably constituted from a polymer-metal composite laminate film, for the sake of weight reduction and thermal conductivity. Examples of the polymer include polypropylene, polyethylene, or another thermoplastic resin material. The metal is, for example, aluminum, stainless steel, nickel, copper, or another metal (including alloys of these). The exterior body 16 is not limited to being constituted from a pair of laminate films (sheet members); for example, a laminate film formed in a bag shape in advance can be used as well.

The battery body and the power generation elements are described in more detail below.

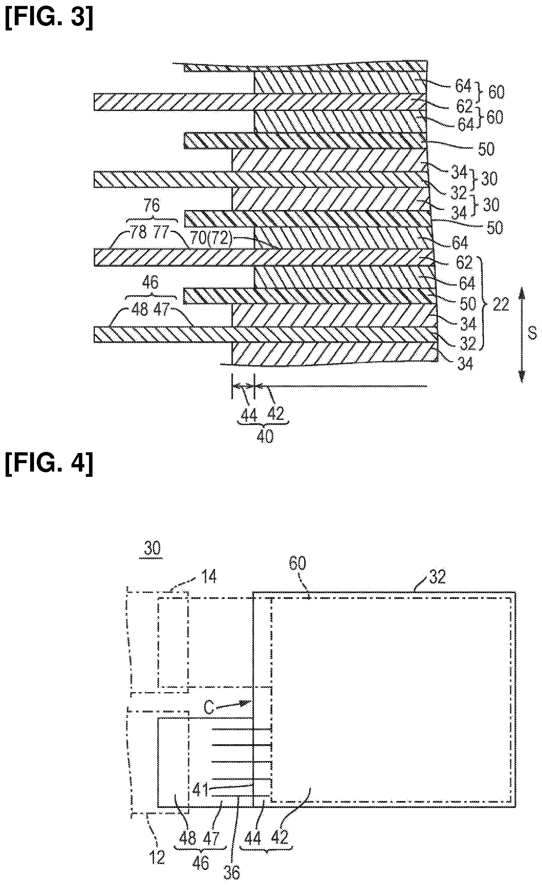

Figure 3 is a sectional view illustrating the battery body and the power generation elements shown in Figure 2.

As indicated in Figure 3, the battery body 20 has negative electrodes 30, separators 50, and positive electrodes 60.

The negative electrodes 30 have a collector 32 and a substantially rectangular negative electrode active material layer 34. A negative electrode active material layer 34 is disposed on both surfaces of the collector 32 in the stacking direction S. In other words, the collector 32 is shared by adjacent negative electrodes 30.

The collector 32 is, for example, constituted from a copper foil having a thickness of about 1-100 µm.

The negative electrode active material layers 34 contain a negative electrode active material and additives, and have a thickness of about 1-100 µm, for example. The negative electrode active material has a composition whereby lithium ions can be desorbed during discharging and lithium ions can be occluded during charging. The additives are a binder and an electroconductivity auxiliary. The binder is added for the purpose of maintaining the structure of the negative electrode, and has a function for binding together constituent materials of the negative electrode active material layers 34, and a function for causing the negative electrode active material layers 34 to bind to the collector 32. The binder is constituted from carboxymethylcellulose (CMC) and styrene-butadiene rubber (SBR), for example. The electroconductivity auxiliary is constituted from a carbon material, etc. having good electrical conductivity, and is blended in order to enhance the electroconductivity of the negative electrode active material layers 34. The carbon material is acetylene black, for example.

In the present embodiment, the negative electrode active material includes a silicon-based material. Silicon has a better lithium ion occluding ability per unit volume than graphite, etc., which makes it possible to increase the capacity of a secondary battery. In particular, in the present embodiment, wrinkling is suppressed, as described hereinafter, and a negative electrode active material containing silicon, which has high expansibility, can therefore easily be applied.

The positive electrodes 60 have a collector 62 and substantially rectangular positive electrode active material layers 64. The positive electrode active material layers 64 are disposed on both surfaces of the collector 62 in the stacking direction S. In other words, the collector 62 is shared by adjacent positive electrodes 60.

The collector 62 has a thickness of about 1-100 µm, for example. The material constituting the collector 62 is the same as the material constituting the collector 32 of the negative electrode 30.

The positive electrode active material layers 64 contain a positive electrode active material and additives, and have a thickness of about 1-100 µm, for example. The positive electrode active material has a composition whereby lithium ions can be desorbed during charging and lithium ions can be occluded during discharging. The positive electrode active material is LiNiCoAlO₂, for example. The additives are a binder and an electroconductivity auxiliary. The binder is added for a purpose of maintaining the structure of the positive electrode, and has a function for binding together constituent materials of the positive electrode active material layers 64, and a function for causing the positive electrode active material layers 64 to bind to the collector 62. The binder is constituted from polyvinylidene fluoride (PVdF), for example. The electroconductivity auxiliary is blended in order to enhance the electroconductivity of the positive electrode active material layers 64, and is the same as the electroconductivity auxiliary in the negative electrodes 30.

The separators 50 are substantially rectangular porous material sheets (porous film) formed from polypropylene, and have a thickness of about 1-50 µm, for example. The separators 50 are disposed between the negative electrode active material layers 34 and the positive electrode active material layers 64, and the negative electrode active material layers 34 and the positive electrode active material layers 64 face each other, interposed by the separators 50.

The separators 50 are impregnated with an electrolyte, and constitute electrolyte layers for retaining the electrolyte. The electrolyte is a liquid electrolyte, for example. In other words, the separators 50 have a function for ensuring conductivity of lithium ions (carrier ions) between the positive electrodes 60 and the negative electrodes 30, and function as barriers between the positive electrodes 60 and the negative electrodes 30.

Each of the power generation elements 22 is constituted from a collector 32 on which a negative electrode active material layer 34 is disposed, the negative electrode active material layer 34, a separator 50, a positive electrode active material layer 64, and a collector 62 on which the positive electrode active material layer 64 is disposed. The collectors 32 and the collectors 62 are shared by adjacent power generation elements 22.

The negative electrode active material layer 34 is configured so as to have a larger area than the positive electrode active material layer 64. A decrease in a facing area between the negative electrode active material layer 34 and the positive electrode active material layer 64 is thereby suppressed even when the positive electrode active material layer 64 becomes misaligned with the negative electrode active material layer 34. Fluctuation in power generation capacity due to a decrease in the facing area is therefore prevented.

The collectors, the silicon-based material of the negative electrode active material, the negative electrode binder, the positive electrode active material, the positive electrode binder, the electroconductivity auxiliary, the separators, and the composition of the electrolyte, etc., will next be described in this order.

The material constituting the collectors 32 is not limited to copper, and another metal or an electroconductive resin is also applicable. The other metal is aluminum, nickel, iron, stainless steel, titanium, a cladding material of nickel and aluminum, a cladding material of copper aluminum, or a cladding material of a combination of these metals, for example. The electroconductive resin is an electroconductive polymer material, an electroconductive polymer material to which an electroconductive filler is added, or a non-electroconductive polymer material to which an electroconductive filler is added, for example.

The silicon-based material of the negative electrode active material is silicon metal (elemental Si), a silicon alloy, a silicon oxide, a silicon compound, or a silicon semiconductor, for example. The silicon alloy includes aluminum, tin, zinc, nickel, copper, titanium, vanadium, magnesium, lithium, or another metal alloyed with silicon. The silicon alloy is preferably a Si-Sn-Ti-based alloy or another alloy based on three or more elements. The silicon oxide is SiO₂, SiO, SiOₓ, etc. The SiOₓ is a mixture of amorphous SiO₂ particles and Si particles (where x represents a number of oxygen atoms satisfying a valence of Si). The silicon compound contains at least one component selected from the group consisting of lithium, carbon, aluminum, tin, zinc, nickel, copper, titanium, vanadium, and magnesium, for example. The negative electrode active material is not limited to a form including only one type of silicon-based material.

The negative electrode binder is not limited to a form including styrene-butadiene rubber (SBR) and carboxymethylcellulose (CMC). For example, a rubber-based binder other than styrene-butadiene rubber (SBR) or a water-soluble polymer other than carboxymethylcellulose (CMC) is also applicable as the negative electrode binder. The negative electrode binder may be a single material, or three or more materials may be used jointly as needed.

The positive electrode active material is not limited to a form including LiNiCoAlO₂, and LiMn₂O₄, LiNiO₂, LiCoO₂, LiNiMnCoO₂, LiFePO₄, etc., for example, are also applicable as appropriate.

The positive electrode binder is not limited to being constituted from polyvinylidene fluoride (PVdF).

The electroconductivity auxiliary is not limited to being constituted from acetylene black. For example, a carbon powder other than acetylene black, vapor-grown carbon fibers (VGCF^{®}) and other carbon fibers, expanded graphite, etc., are also applicable.

The porous material sheet constituting the separators is not limited to being formed from polypropylene. For example, the porous material sheet can also be formed from polyethylene or another polyolefin other than polypropylene, a layered body in which a plurality of polyolefins are layered, polyimides, aramids, polyvinylidene fluoride-hexafluoropropylene (PVdF-HFP), glass fibers, etc. The separators can also be constituted from nonwoven fabric sheets. The nonwoven fabric sheets are formed from, for example, cotton, rayon, acetate, Nylon^{®}, polyester, polyolefins such as polyethylene or polypropylene, polyimides, aramids, etc.

The liquid electrolyte retained by the separators has a solvent and a lithium salt as a supporting electrolyte dissolved in the solvent. Examples of the lithium salt include Li(CF₃SO₂)₂N, Li(C₂F₅SO₂)₂N, LiPF₆, LiBF₄, LiAsF₆, LiTaF₆, LiClO₄, and LiCF₃SO₃. The solvent is ethylene carbonate (EC), propylene carbonate (PC), butylene carbonate (BC), vinylene carbonate (VC), dimethyl carbonate (DMC), diethyl carbonate (DEC), ethyl methyl carbonate (EMC), or methyl propyl carbonate (MPC), for example.

The electrolyte retained by the separators is not limited to a liquid electrolyte. For example, the separators can also retain a gel polymer electrolyte. The gel polymer electrolyte is constituted from a matrix polymer (host polymer) infused with a liquid electrolyte. The matrix polymer is an ion-conductive polymer. Examples of the ion-conductive polymer include polyethylene oxide (PEO), polypropylene oxide (PPO), and copolymers thereof.

A structure of the negative electrodes and the positive electrodes will next be described.

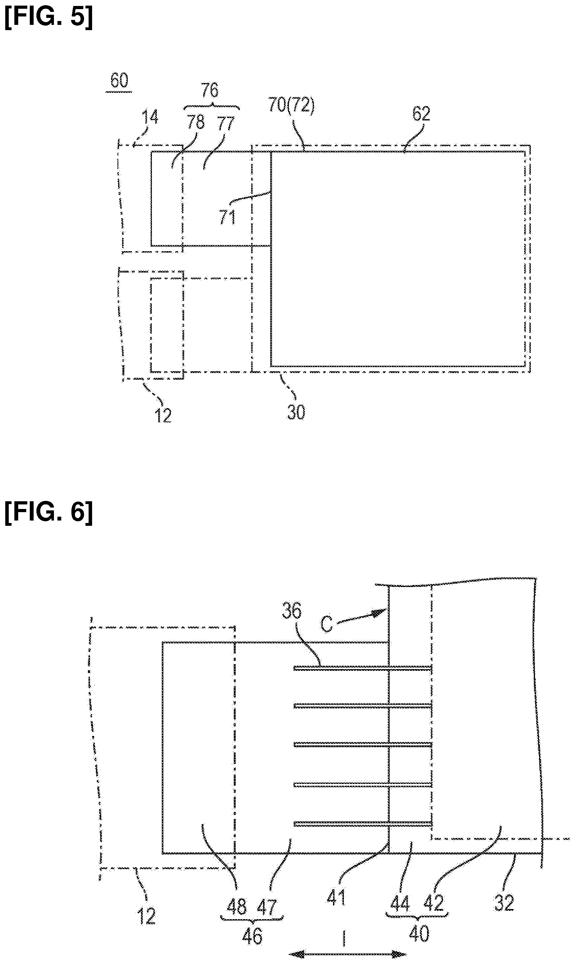

Figure 4 is a plan view illustrating a negative electrode shown in Figure 3, and Figure 5 is a plan view illustrating a positive electrode shown in Figure 3.

As indicated in Figure 4, the collector 32 of the negative electrode 30 has an active material region 40, a non-active-material region 46, and slits 36. The active material region 40 is a region in which the negative electrode active material layer 34 is disposed, and has a facing section 42 and a non-facing section 44.

The facing section 42 is a region facing the positive electrode active material layer 64, interposed by the separator 50. The non-facing section 44 is a region adjacent to the facing section 42 and not facing the positive electrode active material layer 64 (see Figure 3).

The non-active-material region 46 has a transition section 47 and a junction site 48, and protrudes from one side 41 of the substantially rectangular active material region 40. The junction site 48 is a part that is joined (fixed) to the negative electrode tab 12 for drawing electric current toward the outside (see Figure 2). The transition section 47 is positioned between the junction site 48 and the active material region 40. In other words, the junction site 48 faces the active material region 40, interposed by the transition section 47. The reference symbol C is used to indicate a center section of the one side 41.

As indicated in Figure 5, the collector 62 of the positive electrode 60 has an active material region 70 and a non-active-material region 76. The active material region 70 is a region in which the positive electrode active material layer 64 is disposed, and is a facing section 72 facing the negative electrode active material layer 34, interposed by the separator 50 (see Figure 3).

The non-active-material region 76 has a transition section 77 and a junction site 78, and protrudes from one side 71 of the substantially rectangular active material region 70. The junction site 78 is a part that is joined (fixed) to the positive electrode tab 14 for drawing electric current toward the outside (see Figure 2). The transition section 77 is positioned between the junction site 78 and the active material region 70. In other words, the junction site 78 faces the active material region 70, interposed by the transition section 77.

The non-active-material region 76 is positioned so as not to overlap the non-active-material region 46 of the collector 32 of the negative electrode 30 in the stacking direction S. Ultrasonic welding or resistance welding, for example, is applied to join the junction site 48 and the negative electrode tab 12 and to join the junction site 78 and the positive electrode tab 14.

The slits 36 will next be described in detail.

Figure 6 is an enlarged view illustrating the slits shown in Figure 4.

As indicated in Figure 6, the negative electrode collector 32 has a plurality of slits 36. The slits 36 are juxtaposed in a direction (intersecting direction) I intersecting with the one side 41 of the active material region 40, and extend from the non-active-material region 46 to a boundary of the facing section 42 and the non-facing section 44.

For example, in the case of a power generation element (secondary battery) formed by stacking 15 positive electrodes 60 (having an active material region 70 200 × 190 mm in size) and 16 negative electrodes 30 (having an active material region 40 205 × 195 mm in size), interposed by a separator (having a size of 219 ×191 mm, a thickness of 25 µm, and a porosity of 55%), five slits are disposed. A length of the slits in the non-active-material region 46 is 8.5 mm, and the length of the slits in the active material region 40 is 1.5 mm, and a total length of the slits is therefore 10 mm. A slit width is 0.5 mm. A slit interval is 10 mm.

The slits 36 extend from the non-active-material region 46 to the active material region 40, and can therefore reliably relieve stress that occurs in the negative electrode 30 due to a dimensional difference in expansion and contraction between the non-active-material region 46 and the active material region 40 during charging and discharging of the secondary battery 10. Wrinkling originating at a boundary of the non-active-material region 46 and the active material region 40 is therefore suppressed even when there is a large change in volume of the silicon included in the negative electrode active material layer 34. From the perspective of suppressing an effect (interference) on electrical conductivity and strength of the collector 32, the slit width is preferably as small as possible. A method of forming the slits 36 is not particularly limited, and the slits 36 can be formed by press working or machining, for example.

The slits 36 are set apart from the junction site 48 to which the negative electrode tab 12 is fixed, and extend from a point partway along the transition section 47 in the non-active-material region 46. Consequently, the effect (interference) of the slits on the electrical conductivity and junction strength between the negative electrode tab 12 and the junction site 48 can be suppressed. The slits 36 extend from the transition section 47 positioned between the junction site 48 and the active material region 40, and stress caused by fixing of the junction site 48 to the negative electrode tab 12 can therefore be efficiently relieved.

The First to Seventh Modifications will next be described in order.

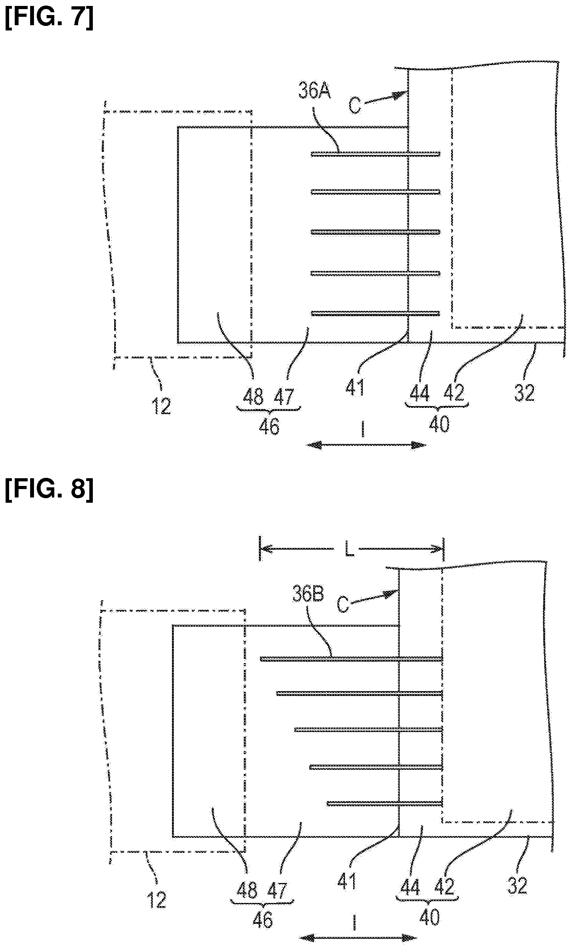

Figure 7 is a plan view illustrating a first modification of an embodiment of the present invention.

The negative electrode 30 is not limited to having slits 36 extending from the non-active-material region 46 to the boundary of the facing section 42 and the non-facing section 44. For example, as in the first modification in Figure 7, the negative electrode 30 can also have slits 36A configured so as to extend to a predetermined position set apart from the boundary of the facing section 42 and the non-facing section 44.

Figure 8 is a plan view illustrating the second modification of an embodiment of the present invention.

The present invention is not limited to a form in which the slits are the same size. For example, a slit length L can also be increased progressively toward the center section C of the one side 41 of the active material region 40, as in the case of the slits 36B of the second modification in Figure 8.

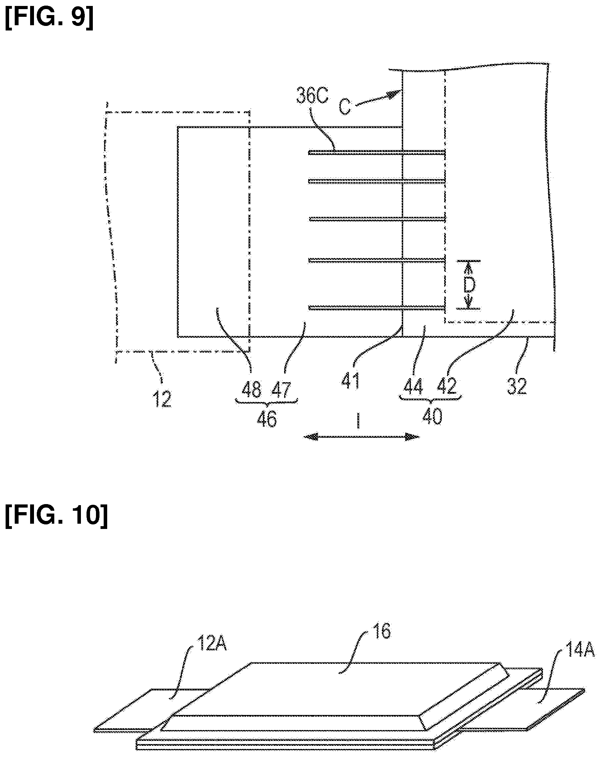

Figure 9 is a plan view illustrating the third modification of an embodiment of the present invention.

The present invention is not limited to a form in which intervals between the slits are the same. For example, a slit interval D can also be decreased progressively toward the center section C of the one side 41 of the active material region 40, as in the case of the slits 36C of the third modification in Figure 9.

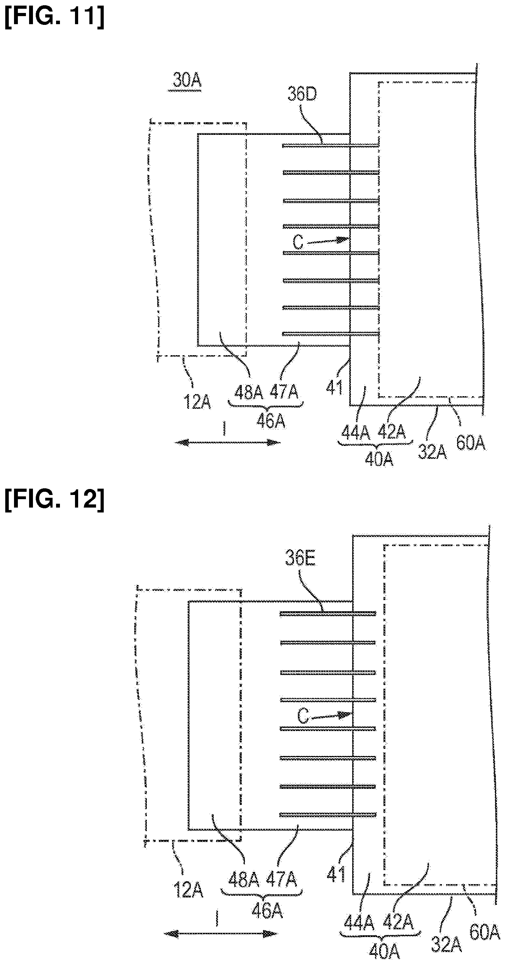

Figures 10 and 11 are an oblique view and a plan view, respectively, illustrating the fourth modification of an embodiment of the present invention.

The secondary battery 10 is not limited to having the negative electrode tab 12 and the positive electrode tab 14 extending outward from one side of the exterior body 16. For example, the secondary battery 10 can also be configured so as to have a negative electrode tab 12A and a positive electrode tab 14A extending outward from one side of the exterior body 16 and one side positioned on an opposite side from the one side, as in the fourth modification in Figure 10.

In this case, a negative electrode 30A has slits 36D extending from a non-active-material region 46A to a boundary of a facing section 42A and a non-facing section 44A, as indicated in Figure 11. The reference symbols 32A, 47A, 48A, and 60A are used to indicate a negative electrode collector, a transition section, a junction section, and a positive electrode, respectively.

Figures 12 through 14 are plan views illustrating the fifth to seventh modifications, respectively, of an embodiment of the present invention.

The slits in the negative electrode 30A can be modified in the same manner as in the first to third modifications.

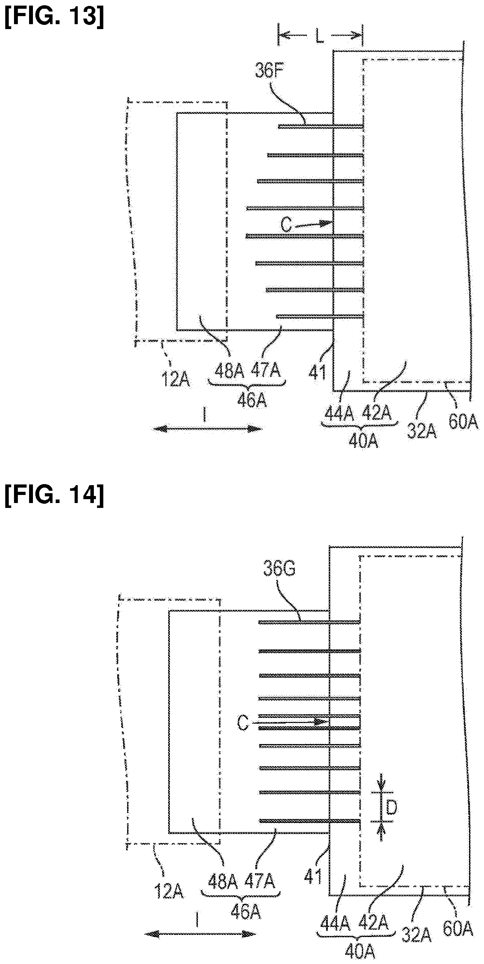

For example, as in the fifth modification in Figure 7, the negative electrode 30A can also have slits 36E configured so as to extend to a predetermined position in the non-facing section 44A that is set apart from the boundary of the facing section 42A and the non-facing section 44A. A slit length L can also be increased progressively toward the center section C of the one side 41 of the active material region 40A, as in the case of the slits 36F of the sixth modification in Figure 13. A slit interval D can also be decreased progressively toward the center section C of the one side 41 of the active material region 40A, as in the case of the slits 36G of the seventh modification in Figure 14.

In the present embodiment, the slits extending from the non-active-material region to the active material region relieve stress that occurs in the negative electrode during charging and discharging of the secondary battery, as described above. Wrinkling originating at the boundary of the non-active-material region and the active material region is therefore suppressed even when there is a large change in volume of the silicon. Consequently, a secondary battery can be provided in which it is possible to suppress wrinkling which originates at the boundary of the non-active-material region and the active material region in the negative electrode.

The slits preferably extend to the boundary of the facing section, which faces the active material region of the positive electrode collector, interposed by the electrolyte layer, and the non-facing section, which does not face the active material region. In this case, stress occurring in the negative electrode during charging and discharging of the secondary battery can be more reliably relieved.

The slits are preferably set apart from the junction site of the tab for drawing electric current toward the outside. In this case, the effect (interference) of the slits on electrical conductivity and junction strength between the tab and the junction site can be suppressed.

The slits preferably extend from the transition section positioned between the junction site and the active material region. In this case, stress caused by fixing of the junction site to the tab can be efficiently relieved.

When a plurality of slits are provided, stress occurring in the negative electrode during charging and discharging of the secondary battery can be more reliably relieved.

Stress increases closer to the center section of the one side of the active material region, and the stress can therefore be more reliably relieved by increasing the slit length or decreasing the slit interval (increasing an arrangement density of the slits) progressively toward the center section of the one side of the active material region.

The area of each negative electrode active material layer is preferably greater than the area of each positive electrode active material layer. In this case, when the positive electrode active material layers become misaligned with the negative electrode active material layers with respect to a transverse direction intersecting with the stacking direction, an effect of the misalignment on a facing area can be suppressed, and fluctuation in power generation capacity can be prevented.

The present invention is not limited to the embodiment described above, and various modifications thereof are possible within the scope of the claims. For example, the secondary battery can also be used in the form of a serialized and/or parallelized assembled battery. The first to third modifications can also be combined, as appropriate, and the fourth to seventh modifications can be combined, as appropriate.

### [Key to Symbols]

10: secondary battery
12, 12A: negative electrode tab
14, 14A: positive electrode tab
16: exterior body
20: battery body
22 power generation element
30, 30A: negative electrode
32, 32A: collector (negative electrode collector)
34: negative electrode active material layer
36, 36A-36F: slits
40, 40A: active material region
41: one side
42, 42A: facing section
44, 44A: non-facing section
46, 46A: non-active-material region
47, 47A: transition section
48, 48A: junction site
50: separator (electrolyte layer)
60, 60A: positive electrode
62: collector (positive electrode collector)
64: positive electrode active material layer
70: active material region
71: one side
72: facing section
76: non-active-material region
77: transition section
78: junction section
80: collector
C: center section
D: slit interval
I: intersecting direction
L: slit length
S: stacking direction

## Claims

1. A secondary battery comprising:
a power generation element including: a positive electrode having a positive electrode collector on which a positive electrode active material layer is disposed; an electrolyte layer for retaining an electrolyte; and a negative electrode having a negative electrode collector on which is disposed a negative electrode active material layer having a negative electrode active material containing silicon;
the positive electrode active material layer and the negative electrode active material layer facing each other with the electrolyte layer interposed therebetween;
**characterized in that**
the negative electrode collector has
an active material region in which the negative electrode active material layer is disposed,
a non-active-material region in which the negative electrode active material layer is not disposed, and
a slit extending from the non-active-material region to the active material region;
the positive electrode collector having an active material region in which the positive electrode active material layer is disposed;
the active material region of the negative electrode collector having a facing section facing the active material region of the positive electrode collector with the electrolyte layer interposed therebetween, and a non-facing section not facing the active material region of the positive electrode collector, and
the slit extending to a boundary of the facing section and the non-facing section.

2. The secondary battery according to claim 1, wherein
the non-active-material region of the negative electrode collector has a junction site to which a tab for drawing electric current to an outside is joined, and the slit is spaced apart from the junction site.

3. The secondary battery according to claim 2, wherein
the non-active-material region of the negative electrode collector has a transition section positioned between the junction site and the active material region of the negative electrode collector, and
the slit extends from the transition section.

4. The secondary battery according to any one of claims 1 to 3, wherein
the negative electrode collector has a plurality of the slits,
the active material region of the negative electrode collector is substantially rectangular, and
the slits are juxtaposed in a direction intersecting with one side of the active material region of the negative electrode collector.

5. The secondary battery according to claim 4, wherein a length of the slits increases progressively toward a center section of the one side.

6. The secondary battery according to claim 4 or 5, wherein an interval of the slits decreases progressively toward the center section of the one side.

7. The secondary battery according to any one of claims 1 to 6, wherein an area of the negative electrode active material layer is greater than an area of the positive electrode active material layer.

## Patentansprüche

1. Sekundärbatterie, die Folgendes umfasst:
ein Leistungserzeugungselement, das Folgendes beinhaltet: eine positive Elektrode mit einem positiven Elektrodenkollektor auf dem ein eine Schicht aus aktivem Material der positiven Elektrode angeordnet ist; eine Elektrolytschicht zum Halten eines Elektrolyten; und eine negative Elektrode mit einem negativen Elektrodenkollektor, auf dem eine Schicht aus aktivem Material der negativen Elektrode mit einem Silizium enthaltenden aktiven Material der negativen Elektrode angeordnet ist;
wobei die Schicht aus aktivem Material der positiven Elektrode und die Schicht aus aktivem Material der negativen Elektrode einander zugewandt sind und die Elektrolytschicht dazwischen angeordnet ist;
**dadurch gekennzeichnet, dass**
der negative Elektronenkollektor Folgendes aufweist:
ein Gebiet aus aktivem Material, in dem die Schicht aus aktivem Material der negativen Elektrode angeordnet ist,
ein Gebiet aus nicht aktivem Material, in dem die Schicht aus aktivem Material der negativen Elektrode nicht angeordnet ist, und
einen Schlitz, der sich von dem Gebiet aus nichtaktivem Material zu dem Gebiet aus aktivem Material erstreckt;
der positive Elektrodenkollektor ein Gebiet aus aktivem Material aufweist, in dem die Schicht aus aktivem Material der positiven Elektrode angeordnet ist;
das Gebiet aus aktivem Material des negativen Elektrodenkollektors einen zugewandten Abschnitt, der dem Gebiet aus aktivem Material des positiven Elektrodenkollektors zugewandt ist, wobei die Elektrodenschicht dazwischen angeordnet ist, und einen nicht zugewandten Abschnitt, der dem Gebiet aus aktivem Material des positiven Elektrodenkollektors nicht zugewandt ist, aufweist und
sich der Schlitz zu einer Grenze des zugewandten Abschnitts und des nicht zugewandten Abschnitts erstreckt.

2. Sekundärbatterie nach Anspruch 1, wobei
das Gebiet aus nicht aktivem Material des negativen Elektrodenkollektors eine Verbindungsstelle aufweist, mit der eine Fahne zum Ableiten von elektrischem Strom nach außen verbunden ist, und
der Schlitz von der Verbindungsstelle beabstandet ist.

3. Sekundärbatterie nach Anspruch 2, wobei
das Gebiet aus nicht aktivem Material des negativen Elektrodenkollektors einen Übergangsabschnitt aufweist, der zwischen der Verbindungsstelle und dem Gebiet aus aktivem Material des negativen Elektrodenkollektors positioniert ist, und
sich der Schlitz von dem Übergangsabschnitt aus erstreckt.

4. Sekundärbatterie nach einem der Ansprüche 1 bis 3, wobei
der negative Elektrodenkollektor mehrere Schlitze aufweist,
das Gebiet aus aktivem Material des negativen Elektrodenkollektors im Wesentlichen rechteckig ist und die Schlitze in einer Richtung, die eine Seite des Gebiets aus aktivem Material des negativen Elektronenkollektors schneidet, nebeneinanderliegen.

5. Sekundärbatterie nach Anspruch 4, wobei eine Länge der Schlitze in Richtung eines mittleren Abschnitts der einen Seite zunehmend größer wird.

6. Sekundärbatterie nach Anspruch 4 oder 5, wobei ein Abstand zwischen den Schlitzen in Richtung des mittleren Abschnitts der einen Seite zunehmend kleiner wird.

7. (Geändert) Sekundärbatterie nach einem der Ansprüche 1 bis 6, wobei eine Fläche der Schicht aus aktivem Material der negativen Elektrode größer als eine Fläche der Schicht aus aktivem Material der positiven Elektrode ist.

## Revendications

1. Batterie secondaire comprenant :
un élément de génération de puissance comportant : une électrode positive ayant un collecteur d'électrode positive sur lequel une couche de matériau actif d'électrode positive est disposée ; une couche d'électrolyte pour retenir un électrolyte ; et une électrode négative ayant un collecteur d'électrode négative sur lequel est disposée une couche de matériau actif d'électrode négative ayant un matériau actif d'électrode négative contenant du silicium ;
la couche de matériau actif d'électrode positive et la couche de matériau actif d'électrode négative se faisant face, avec la couche d'électrolyte intercalée entre elles ;
**caractérisée en ce que**
le collecteur d'électrode négative a
une région de matériau actif dans laquelle la couche de matériau actif d'électrode négative est disposée,
une région de matériau non actif dans laquelle la couche de matériau actif d'électrode négative n'est pas disposée, et
une fente s'étendant de la région de matériau non actif à la région de matériau actif ;
le collecteur d'électrode positive ayant une région de matériau actif dans laquelle la couche de matériau actif d'électrode positive est disposée ;
la région de matériau actif du collecteur d'électrode négative ayant une section en regard faisant face à la région de matériau actif du collecteur d'électrode positive avec la couche d'électrolyte intercalée entre elles, et une section non en regard ne faisant pas face à la région de matériau actif du collecteur d'électrode positive, et
la fente s'étendant jusqu'à une limite de la section en regard et de la section non en regard.

2. Batterie secondaire selon la revendication 1,
la région de matériau non actif du collecteur d'électrode négative ayant un lieu de jonction auquel une languette pour tirer du courant électrique vers un extérieur est reliée, et la fente étant espacée du lieu de jonction.

3. Batterie secondaire selon la revendication 2,
la région de matériau non actif du collecteur d'électrode négative ayant une section de transition située entre le lieu de jonction et la région de matériau actif du collecteur d'électrode négative, et
la fente s'étendant depuis la section de transition.

4. Batterie secondaire selon l'une quelconque des revendications 1 à 3,
le collecteur d'électrode négative ayant une pluralité des fentes,
la région de matériau actif du collecteur d'électrode négative étant sensiblement rectangulaire, et
les fentes étant juxtaposées dans une direction croisant un côté de la région de matériau actif du collecteur d'électrode négative.

5. Batterie secondaire selon la revendication 4, une longueur des fentes augmentant progressivement vers une section centrale dudit côté.

6. Batterie secondaire selon la revendication 4 ou 5, un intervalle des fentes diminuant progressivement vers la section centrale dudit côté.

7. Batterie secondaire selon l'une quelconque des revendications 1 à 6, une zone de la couche de matériau actif d'électrode négative étant plus grande qu'une zone de la couche de matériau actif d'électrode positive.
